# EUROPEAN PATENT SPECIFICATION

(11) **EP 1 602 858 B1**
(45) Date of publication and mention of the grant of the patent: **03.09.2008**
(21) Application number: 04711763.5
(22) Date of filing: 17.02.2004
(51) Int. Cl.: F16H 25/22

(54) **BALL SCREW DEVICE**
KUGELSPINDELVORRICHTUNG
DISPOSITIF DE VIS A BILLES

(30) Priority: 18.02.2003 JP 2003039459
(43) Date of publication of application: 07.12.2005
(73) Proprietor: JTEKT Corporation, Osaka-shi Osaka 542-8502 (JP)
(72) Inventor: INOUE, Masahiro, Chuo-ku, Osaka-shi Osaka 542-8502 (JP); USUKI, Isao, Chuo-ku, Osaka-shi Osaka 542-8502 (JP); KOYAGI, Katsura, Chuo-ku, Osaka-shi Osaka 542-8502 (JP)
(74) Representative: Steinmeister, Helmut
(86) International application number: PCT/JP2004/001702
(87) International publication number: WO 2004/074712

(56) References cited:
- EP-A- 1 426 660
- EP-A1- 1 424 513
- GB-A- 526 735
- JP-A- 4 236 845
- JP-A- 59 017 058
- JP-U- 53 138 085
- JP-U- 64 011 466
- US-A- 4 070 921
- US-A1- 4 034 833

## Description

### BACKGROUND OF THE INVENTION

The present invention relates to a ball screw device used for feed machines and other industrial machinery and equipment operated at high speed or under heavy load or other similar condition. More specifically, the invention relates to a ball screw device suitable for use in cases where high rigidity, long life and rapid feed are required under a heavy load.

**Document** JP 04 236845 A**, which represents the closest prior art, discloses a ball screw device comprising the features of the preamble of claim 1.**

**Moreover, documents** EP-A-1 426 660 **and** EP-A1-1 424 513 **represent state of the art according to Art. 54 (3) EPC.**

A ball screw device comprises a screw shaft having a spiral screw groove on an outer peripheral surface and extending in the axial direction, and a nut member having screw grooves corresponding to the above screw grooves on an inner peripheral surface. The nut engages with the screw shaft. A plurality of balls that serve as rolling bodies are rotatably loaded between the screw grooves. The device is configured so that rotation of the nut member or the screw shaft causes the nut member or screw shaft to move in the axial direction, through the rolling of the balls, so that the overall ball screw device expands or contracts.

The above disclosed ball screw device employs a return tube (see Laid-Open Japanese Patent Application No. H07-253146) or a circulation piece (see Laid-Open Japanese Patent Application No. 2000-18360) in order to prevent balls from sliding out of the screw grooves and to have the balls endlessly circulate during the expanding and contracting operation. However, in the above ball screw device, special parts such as a return tube, circulation piece or the like for endless circulation of balls affect manufacturing costs.

### BRIEF SUMMARY OF THE INVENTION

A ball screw device of the present invention comprises **the features of claim 1.**

Preferably, the ball circulation grooves are curved so that at an intermediate area of the ball rolling direction sinks inward radially. Preferably, the ball circulation grooves are disposed so that their axial projections do not overlap.

Without employing a return tube or circulation piece, a ball screw device with the above configuration allows balls to endlessly circulate in accordance with rotation of a screw shaft and a nut member relative to each other. Therefore Because expensive parts such as a return tube or a circulation piece are not used, manufacturing costs can be reduced. Further, the ball circulation grooves are disposed so as to be shifted relative to each other, reducing non-load regions and thus improving load-support rigidity of the ball screw device.

### BRIEF DESCRIPTION OF THE DRAWINGS

Accompanying the specification are figures which assist in illustrating the embodiments of the invention, in which:
FIG. 1 is a vertical cross-sectional view of a ball screw device relating to the best mode of the present invention;
FIG. 2 is a vertical cross-sectional view illustrating a ball screw device in a state where a nut member is moved from the state in FIG. 1;
FIG. 3 is an exploded perspective view of a ball screw device;
FIG. 4 is an enlarged partial cross-sectional view of a ball screw device;
FIG. 5 is an enlarged side view of the main portions of a ball screw device;
FIG. 6 is an enlarged front view of the main portions of a ball screw device;
FIG. 7 is a linear diagram of a ball screw device; and
FIG. 8 is an enlarged partial cross-sectional view of a ball screw device relating to another embodiment of the present invention.

### DETAILED DESCRIPTION OF THE INVENTION

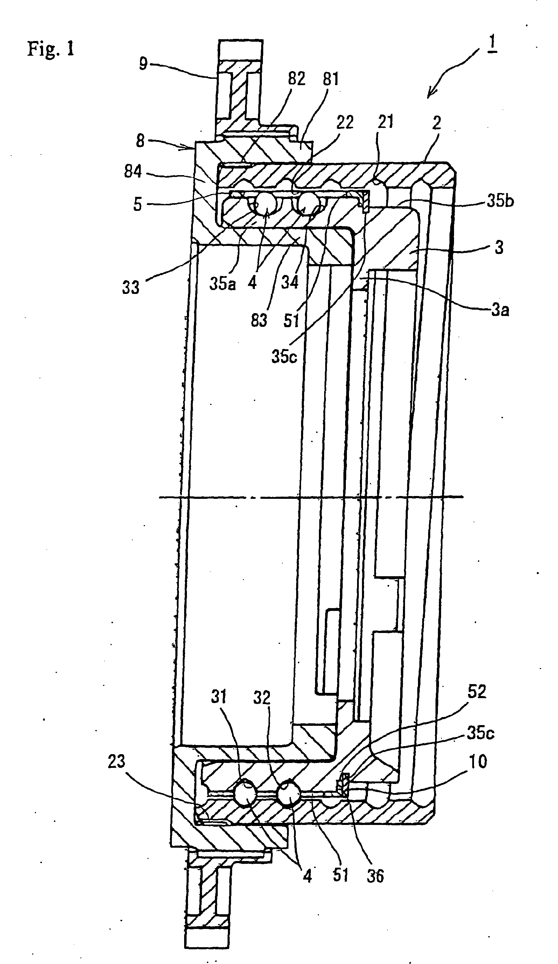

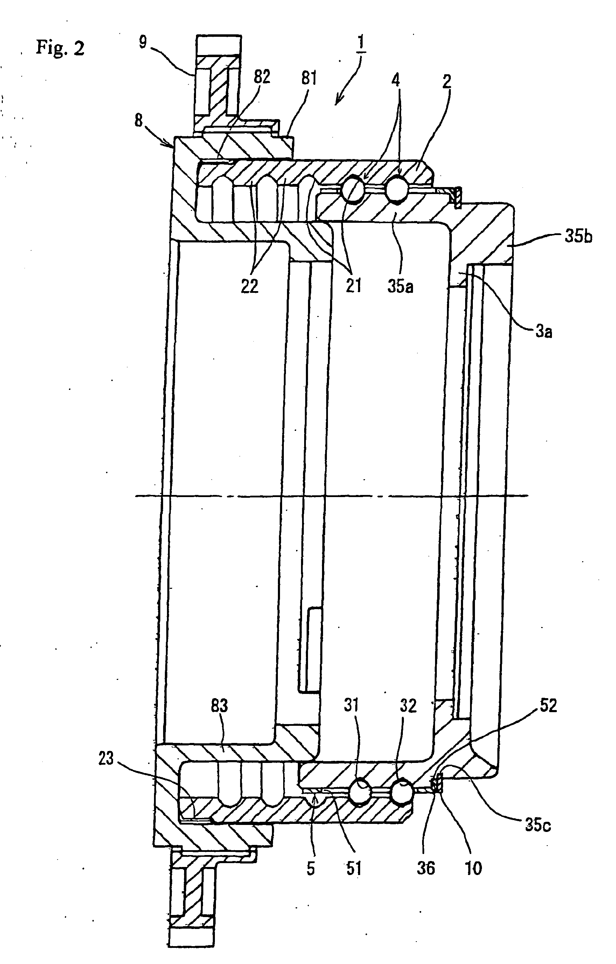

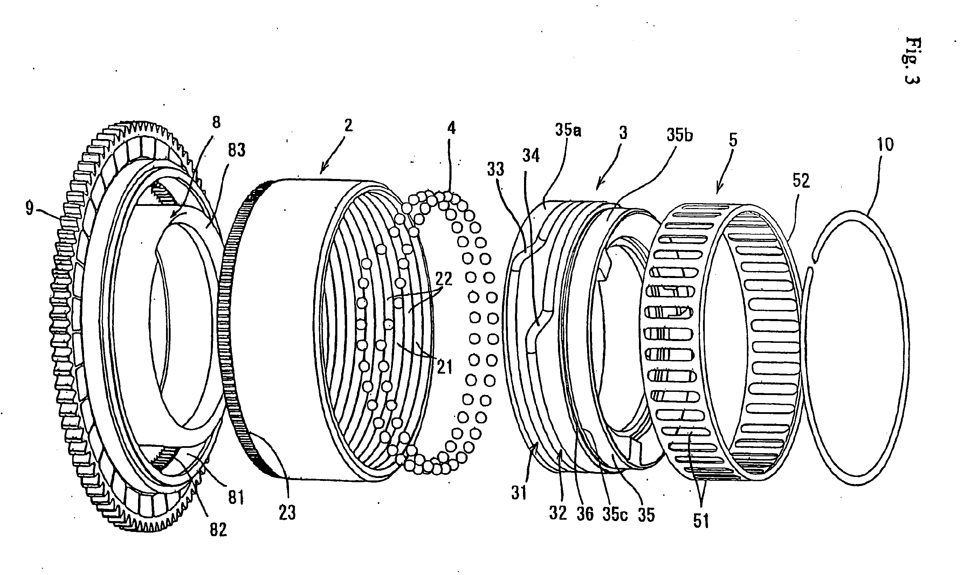

A ball screw device relating to one embodiment of the present invention will be explained with reference to the drawings. FIG. 1 illustrates a ball screw device in a state where a nut member 2 has moved so as to overlap to the greatest extent possible a screw shaft 3 on the fixed side. FIG. 2 illustrates a ball screw device in a state where the nut member 2 is moved so as to overlap to the least extent possible with the screw shaft 3 on the fixed side. FIG. 3 illustrates a ball screw device 1 in an exploded state.

In FIGS. 1 through 3, 1 indicates the overall ball screw device, and this ball screw device 1 comprises the nut member 2. The nut member 2 comprises a single continuous spiral screw groove 21 having a prescribed lead angle on the inner peripheral surface extending from the base side shown at the left of the drawings to the free end at the right of the drawings. The nut member 2 is formed in a cylindrical shape having a serration 23 on an outer peripheral surface of the base side.

The screw shaft 3 is disposed concentrically with and radially inward of the nut member 2 and is shorter than the nut member 2 in the axial direction. The shaft 3 is formed in the shape of a cylinder having a screw groove formation part 35a formed on the base side, a small diameter part 35b formed on the free end side, and a step wall surface 36 formed therebetween.

On the outer peripheral surface of the screw groove formation part 35a of the screw shaft 3, there are provided two screw grooves 31, 32. The grooves 31, 32 have a screw length of less than one full turn and the same lead angle equivalent as that of the screw groove 21 of the nut member 2. The outer peripheral surface of the screw groove has a ball circulation groove 33 that connects the two ends of the screw groove 31 and a ball circulation groove 34 that connects the two ends of the screw groove 32.

The screw grooves 31, 32 are disposed so as maintain the same distance from each other in the circumferential direction. The screw groove 21 of the nut member 2 and the screw grooves 31, 32 of the screw shaft 3 have Gothic arch-shaped cross sections. The grooves 21, 31 and 32 may also have a semicircular or other groove shape.

On the outer peripheral surface of the small diameter 35b of the screw shaft 3, a peripheral groove 35c is formed. At an intermediate location in the axial direction of the inner peripheral surface of the screw shaft 3, an annular reinforcing section 3a that projects radially inward is formed. The screw shaft 3 is fixed in a housing (not shown in drawings) of a machine etc. incorporating the ball screw device 1. In the foregoing configuration, the nut member 2 is provided rotatably with respect to the screw shaft 3 and movably in the axial direction. A large number of balls 4 are provided in equal allotments to the screw groove 31 and screw groove 32.

A retainer 5 is a thin-walled cylinder having formed thereupon pockets 51 equidistant in the circumferential direction. The pockets 51 accommodate the balls 4 in two rows so that they do not interfere with each other. The retainer 41 has a flange 52 directed radially inward on the free end side. The flange 52 engages with the small diameter part 35b of the screw shaft 3, and is disposed in a state where a retaining ring 10 interlocked with the step wall surface 36 of the screw shaft 3 and the peripheral groove 35c of the small diameter part 35b allows slight play in the axial direction.

With the above configuration, the retainer 5 is almost immovable in the axial direction with respect to the screw shaft 3, allowing rotation in tandem.

A bracket 8 comprises an outer cylinder 81 and an inner cylinder 83 parallel thereto and opposite thereto in the radially inward direction. The bracket 8 has an annular board 84 integrally connecting the cylinders 81, 83 at the base side. The bracket 8 comprises a rolling bearing (not shown in the drawings) fitted in the inner cylinder 83 and is rotatably supported by a spindle inserted in a center hole of the screw shaft 3 via the rolling bearing.

A gear 9 is engaged with a rotation power source such as a motor (not shown in the drawings) via a reduction gear. The gear 9 is integrally molded with the bracket 8 by injection molding of a resin on the outer peripheral surface of the outer cylinder 81 of the bracket 8.

On an inner surface of the outer cylinder 81 the nut member 2 is screwed on. On the inner peripheral surface of the outer cylinder 81, a serration 82 is formed. The serration 82 engages with the serration 23 formed toward the interior in the screw-in direction on the outer peripheral surface of the nut member 2. Thus the bracket 8 and the nut member 2 are attached to each other so as to rotate as a unit.

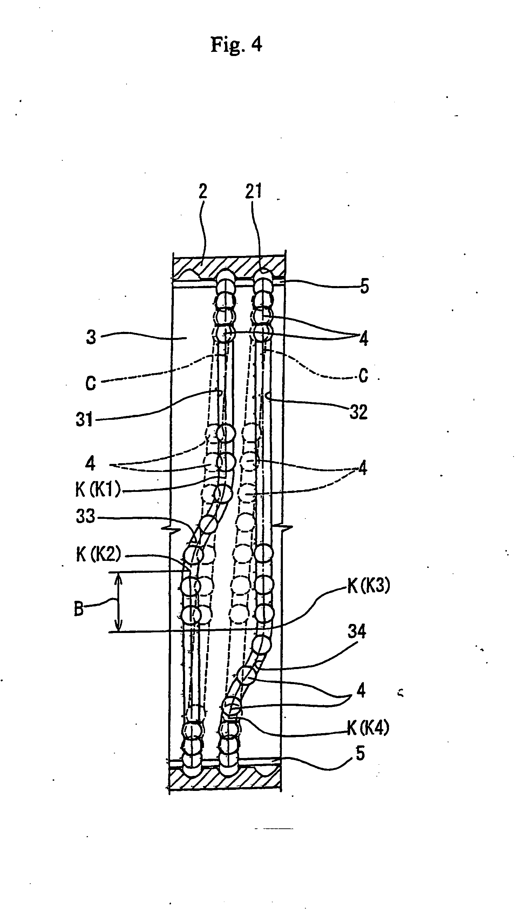

The ball circulation grooves 33, 34 will be explained with reference to FIG. 4 through FIG. 7. In the following explanation, the side of the screw grooves 31, 32 at which balls roll out from the ball circulation grooves 33, 34 shall be referred to as the upstream side from the perspective of the ball circulation grooves 33, 34. The side of the screw grooves 31, 32 at which balls roll into the ball circulation grooves 33, 34 shall be referred to as the downstream side from the perspective of the ball circulation grooves 33, 34.

The screw groove 31 and the ball circulation groove 33 form a closed-loop in which the balls roll and endlessly circulate. The screw groove 32 and the ball circulation groove 34 form another closed-loop in which the balls roll and endlessly circulate.

In FIG. 4, the screw grooves 31, 32 are illustrated by solid lines showing the half of the outer peripheral surface of the screw shaft 3 that is on the front side as seen in the drawing. Dotted lines for the opposite half thereof. The balls 4 that roll therein are similarly illustrated by solid lines and dotted lines.

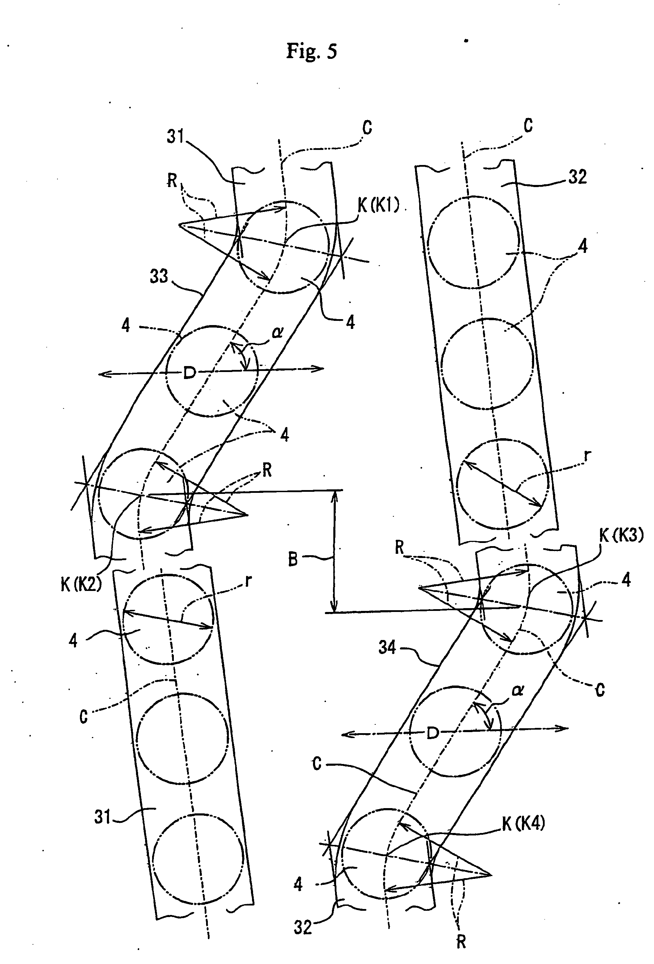

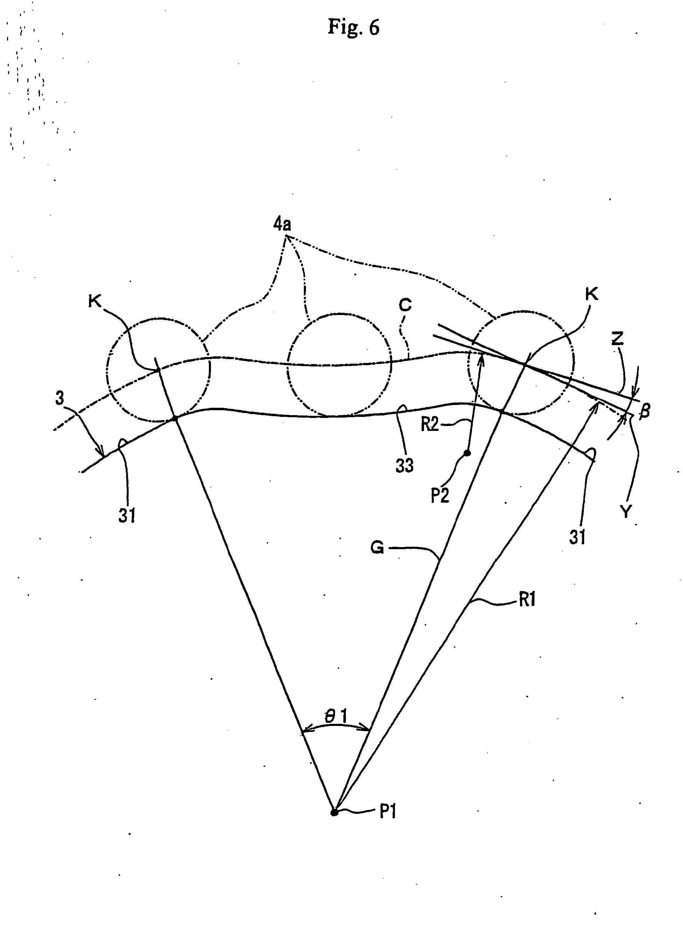

FIG. 5 illustrates the ball circulation grooves 33, 34 enlarged for the purpose of explanation. FIG. 6 is a drawing of the ball circulation groove 33 of FIG. 5, as seen from the side, to explain the rolling of the balls 4 from upstream to downstream with respect to the ball circulation groove 33.

The circulation of the balls 4 will be explained. When the nut member 2 rotates around the shaft, the balls 4 of each row independently circulate between the screw groove 21 and the screw grooves 31, 32. The ball circulation grooves 33, 34 cause the balls 4 that have rolled in from the downstream side to roll sinking down radially inward in order, thus returning them to the upstream side. Thus, the ball circulation grooves 33, 34 curve so as to sink inwardly, being formed in a sinuous shape from the downstream side toward the upstream side.

The screw groove 21 and the screw grooves 31, 32 constitute load regions. The load regions can bear a load so as to move the nut member 2 with respect to the screw shaft 3. In comparison, the ball circulation grooves 33, 34 constitute non-load regions.

The specific shape of the ball circulation grooves 33, 34 will be explained based on centroid C of the balls 4. As the ball circulation grooves 33, 34 have identical shapes, only the shape of the ball circulation groove 33 will be explained. The screw groove 31 works with this ball circulation groove 33.

First, in order to have the balls 4 smoothly roll in from the upstream side or smoothly roll out to the downstream side of the ball circulation grooves 33, 34, it is preferable that the angle of occupation 'theta 1', θ₁ be set as large as possible. The angle of occupation 'theta 1', θ₁ is the angle formed by 1) points of intersection K between the large arc R1 as defined by centroid C of the ball 4 in the screw groove 31 and the small arc R2 as defined by centroid C of the ball 4 in the end portion of the ball circulation groove 33 (there is one point of intersection K upstream and one downstream) and 2) the center of curvature P1 of the large arc R1.

By having the balls 4 inwardly sink, the ball circulation groove 33 returns the balls 4 from the downstream side to the upstream side. Thus, the balls 4 cannot bear a thrust load or radial load within the ball circulation groove 33. In order to enlarge the load region, it is preferable to reduce the angle of occupation 'theta 1', θ₁ corresponding to the circumferential length of the lateral projection of the ball circulation groove 33) to shorten the ball circulation groove 33.

In the above, there are the conflicting demands of enlarging the angle of occupation q1 to improve circulation of the balls 4 and of reducing the angle of occupation q1 to improve load capacity. The shape of the ball circulation groove 33 is determined with consideration given to such demands.

The angle of inclination a of the ball circulation groove 33 is the angle formed at the crossing of an axial direction D which is a travel direction of the nut member 2 and the centroid C of the balls 4 in the ball circulation groove 33. The angle of inclination 'alpha', α is set to be no less than 40 degrees and no more than 60 degrees.

The larger the angle of inclination 'alpha', α is, for example, above 60 degrees, the longer the rolling distance of the balls 4 in the ball circulation groove 33 becomes. Correspondingly, the larger the angle of occupation 'theta', θ₁ becomes. Therefore, when the angle of inclination a is made large, the rolling resistance working on the balls 4 rolling in the ball circulation groove 33 is reduced, improving operational smoothness of the balls 4. However, as described above, this also means that the load region is reduced and the load capacity of the ball screw device 1 (capacity to bear a thrust load or a radial load) is reduced.

The smaller the angle of inclination a is, for example less than 45 degrees, the shorter the rolling distance of the balls 4 becomes in the ball circulation groove 33, increasing load capacity. However, the rolling resistance working on the balls 4 increases, decreasing operational smoothness of the balls 4.

Because of this, in consideration of the fact that when the angle of inclination a is made large, operational smoothness of the balls 4 improves but the angle of occupation 'theta', θ₁ increases. Accordingly, load capacity is reduced. By setting the angle of inclination a within the above range (no less than 40 degrees and no more than 60 degrees) so as be as small as possible, the angle of occupation 'theta', θ₁ is made as small as possible to improve the load capacity.

For smooth rolling of the balls 4, the screw groove 31 and the ball circulation groove 33 must be loosely connected. As illustrated in FIG. 5, the connecting section between the screw groove 31 and the ball circulation groove 33 has a curvature such that the centroid C of the balls 4 in the connected section has a curvature radius at least 1.8 times the diameter r of the balls 4. With such a curve shape, when a ball 4 rolls into the ball circulation groove 33 or when a ball 4 rolls out from the ball circulation groove 33, the rolling resistance working on the ball 4 is reduced and rolling of the balls 4 becomes smoother. Accordingly, wear resistance is improved.

As illustrated in FIG. 6, the ball circulation groove 33 is formed in a curved shape (concave curve shape) so that an intermediate area in the rolling direction of the balls 4 sinks radially. The groove 33 is also formed in a curved shape (convex curve shape) so that both end areas in the rolling direction of the balls 4 swell outward in the radial direction. The centroid C defined by the balls 4 rolling in both end areas in the rolling direction of the balls 4 of the ball circulation groove 33 and the centroid C defined by the balls 4 rolling in the screw groove 31 cross at a prescribed angle 'beta', β.

The angle 'beta', β at the above intersection K, is the angle formed by the crossing of a first line Y tangential to the large arc R1 and a second line Z tangential to the small arc R2. The angle 'beta', β is set to be greater than zero and no more than 30 degrees, preferably 20 degrees or less. If the center of curvature P2 of the small arc R2 is on the straight line G extending from the center of curvature P1 of the large circular arc R1 through the intersection K, the crossing angle 'beta', β becomes zero.

By setting the crossing angle 'beta', β within the prescribed angle, the displacement of the balls 4 in the radial direction when the balls 4 roll into or roll out from the ball circulation groove 33 can be reduced. Accordingly, the balls 4 smoothly roll in or out. When the crossing angle 'beta', β is set at greater than 30 degrees, the displacement of the screw groove 31 and the balls 4 in the radial direction becomes too large. The large displacement is not preferable.

The ball circulation groove 33 is a region in which the balls 4 do not bear load. By making this area as small as possible, the load capacity is made as big as possible and the rolling resistance working on the balls 4 rolling in the ball circulation groove 33 becomes as small as possible. As such, the rolling of the balls 4 is made smooth. The foregoing similarly applies to the other ball circulation groove 34.

The ball circulation grooves 33, 34, as described above, are regions where the balls 4 do not bear a load. Thus, if the ball circulation grooves 33, 34 are disposed so that they are shifted relative to each other so that they do not overlap in the circumferential direction (screw groove direction), there is no non-load region. Not overlapping in the circumferential direction means, in other words, that both ball circulation grooves 33, 34 are disposed so that no portions of the axially projected areas overlap each other.

The relationship between the ball circulation grooves 33, 34 will be explained in detail. In one ball circulation groove 33, the intersection K at the top of the drawing is start point K1 of the ball circulation groove 33. The intersection K toward the bottom of the drawing is an end point K2 of the ball circulation groove 33. In the other ball circulation groove 34. The intersection K toward the top of the drawing is a start point K3 of the ball circulation groove 34, and the intersection K toward the bottom of the drawing is an end point K4 of the ball circulation groove 34.

In this case, the end point K2 of one ball circulation groove 33 and the start point K3 of the other ball circulation groove 34 are separated only by a prescribed spacing B having a distance of more than zero in the circumferential direction. In other words, one ball circulation groove 33 and the other ball circulation groove 34 are positioned so that they are apart from each other in the circumferential direction.

The raceway from the start point K1 to the end point K2 of the ball circulation groove 33 and the raceway from the start point K3 to the end point K4 of the ball circulation groove 34 are of equal length.

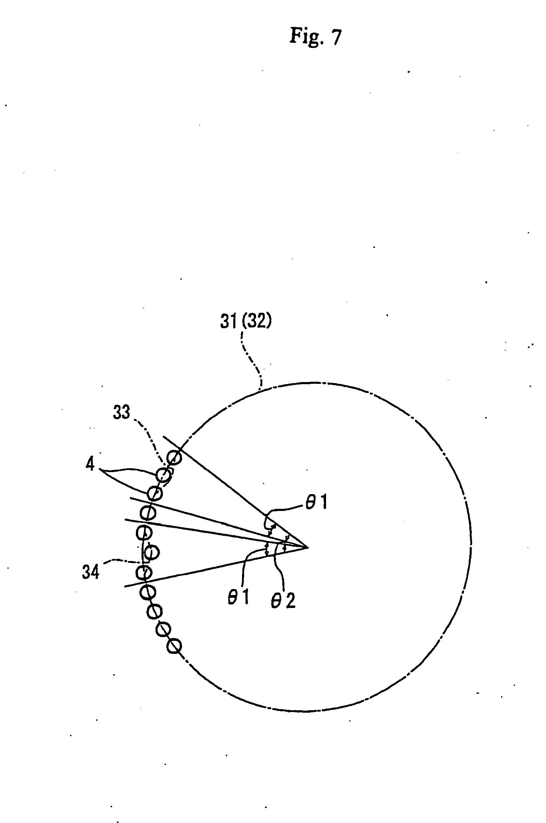

As illustrated in FIG. 7, in this case, when the ball circulation grooves 33, 34 are projected in the axial direction, between the respective angles of occupation 'theta 1', θ₁ of the ball circulation grooves 33, 34, there is an area having an angle 'theta 2', θ₂ corresponding to the prescribed spacing B. This area is a load-bearing region in which the screw grooves 31, 32 overlap. Further, one ball circulation groove 33 and the other screw groove 32 overlap in the axially projected area of the angle of occupation 'theta 1', θ₁, and the other ball circulation groove 34 and the one screw groove 31 overlap in the axially projected area of the angle of occupation 'theta', θ_{1.} The areas indicated by the angles of occupation 'theta', θ₁ are load-bearing region as these are areas corresponding to sections of either of the screw grooves 31, 32. Thus, there will be no non-loading bearing regions in the circumferential direction of the ball screw device 1.

Operation of the ball screw device 1 having the above configuration will be explained. First, a motor (not shown in the drawings) is driven, causing a gear 9 to rotate. As a result, the bracket 8 and the nut member 2 both rotate around the shaft center.

At this time, the nut member 2, while rotating, is guided by the screw shaft 3 and moved linearly in one axial direction. Thus, the nut member moves from the state illustrated in FIG. 1 to the state illustrated in FIG. 2. When the motor is driven in the reverse rotation direction, the nut member 2, rotating in the direction opposite to the above, is moved in the other axial direction. Thus, the nut member moves from, for example, the state illustrated in FIG. 2 to the state illustrated in FIG. 1. In this way, when the nut member 2 is moved reciprocatingly in the axial direction, the range in which the nut member 2 and the screw shaft 3 overlap varies.

When the range in which the nut member 2 and the screw shaft 3 overlap is changed, among the balls 4 of each row, the balls 4 on the downstream side of the screw grooves 31, 32 move toward the ball circulation grooves 33, 34. The balls 4 are sequentially supplied to the ball circulation grooves 33, 34 so as to sink radially inward toward the screw shaft 3. Each ball independently circulates endlessly, returning to the upstream side of the screw grooves 31, 32.

The present invention is configured so that each screw groove 31, 32, located axially adjacent to each other on the screw shaft 3, forms an independent closed-loop. The ball groups 4 are caused to rollingly circulate in these closed-loops. Because the present invention does not use a circulation piece, but instead provides ball circulation grooves 33, 34 in the screw shaft 3, fewer parts are used compared to conventional art.

With the present invention, there is no need to form a through-hole for attaching a circulation piece to the nut member 2 or assembling a circulation piece. Accordingly, manufacturing cost is reduced.

The present invention does not require alignment of ball circulation groove and screw groove for a circulation piece as in the conventional art. Accordingly, allowed quality degradation caused by displacement and the like can be avoided.

Further, the following are load bearing regions: the area of angle 'theta 2', θ₂ corresponding to the prescribed spacing B between the angles of occupation q1 of the ball circulation grooves 33, 34; the axially projected area of the angle of occupation 'theta 1', θ₁ in the one ball circulation groove 33 and the other screw groove 32; and the axially projected area of the angle of occupation 'theta 1', θ₁ in the other ball circulation groove 34 and the one screw groove 31.

Therefore, in the present invention, even though it comprises the ball circulation groove 33, there is no non-load-bearing region in the circumferential direction of the nut member 2 and the screw shaft 3. Accordingly, a decline in load capacity of the ball screw device 1 is prevented.

Further, with the present invention, by reducing the axial direction size of the nut member 2 and the screw shaft 3 and making the outer diameter large, the angle 'theta 1', θ₁ range of the regions where the ball circulation grooves 33, 34 are present on the circumference can be reduced. Accordingly, the number of balls 4 in the ball circulation grooves 33, 34 is decreased. As a result, even more reliable inhibition of decline in load capacity is allowed.

Within the screw grooves 31, 32 that each form an independent closed-loop with the respective ball circulation grooves 33, 34 in the screw shaft 3, the balls 4 are guided by the retainer 5 as they rollingly circulate. Thus, the spiral motion of the nut member 2 is smoothly guided. Moreover, the balls 4 are reliably prevented from slipping off while the nut member 2 reciprocates within a prescribed stroke range.

The present invention may be configured so that two or more screw grooves are provided, depending on the length in the axial direction of the ball screw device 1. In this case, the ball circulation grooves formed in each screw groove are configured so that they are disposed shifted relative to each other in the circumferential direction so as not to overlap in the axial direction. Such a configuration allows the ball screw device 1 to have a load-bearing region across the entire circumferential direction, eliminating decline of load capacity.

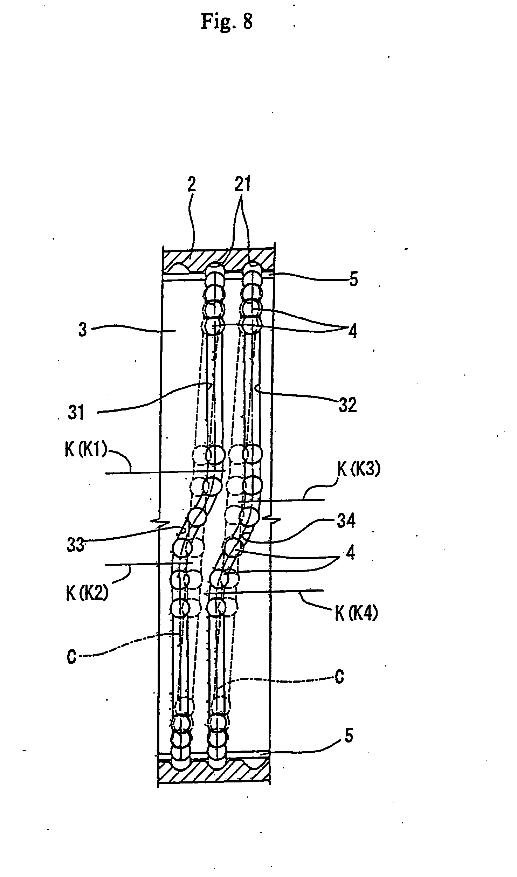

Alternatively, the present invention may be configured as illustrated in FIG. 8. In this embodiment, the start point K1 and end point K2 of the ball circulation groove 33 and the start point K3 and the end point K4 of the ball circulation groove 34 are chosen so that the axial direction projection areas of one ball circulation groove 33 and the other ball circulation groove 34 partially overlap. In this case, the section where the ball circulation grooves 33, 34 overlap each other is a non-load-bearing region. At all other sections, however, there will be part of either of the screw grooves 31, 32. These other sections will constitute a load-bearing region.

Thus the non-load-bearing region can be reduced compared to a case where the ball circulation grooves 33, 34 completely overlap in the groove direction.

The present invention may also be configured so that one ball circulation groove 33 and the other ball circulation groove 34 are disposed shifted from each other so that they approach each other in the circumferential direction. When the ball circulation grooves 33, 34 are made to be closer to each other, this is done is a manner so that the ball circulation grooves 33, 34 do not interfere with each other. Even when the ball circulation grooves 33, 34 are shifted in the circumferential direction so that they approach each other, the non-load-bearing region is reduced when compared to a case where the ball circulation grooves 33, 34 are disposed. Accordingly, the axially projecting areas completely overlap, raising load support rigidity of the ball screw device 1 overall.

The ball screw device of the present invention can be employed in feed machines and other industrial machinery and equipment operated at high speed or under heavy load.

## Claims

1. A ball screw device (1) comprising:
a screw shaft (3) having a spiral screw groove (31.32) on the outer peripheral surface and extending in the axial direction;
a nut member (2) having on an inner peripheral surface a plurality of screw grooves (21) of less than one turn corresponding to the above screw groove (31,32) and a plurality of ball circulation grooves (33,34) connecting the upstream side and downstream side of each screw groove (31,32), and extending in the axial direction; and
a number of balls (4) interposed between the screw grooves (31,32);
wherein the ball circulation (33.34) grooves are disposed so as to be shifted relative to each other in the circumferential direction
**characterized in that**
the ball circulation groove (33) is further curved so that both end areas in the ball rolling direction swell radially outward, and the angle (beta', β) formed by the crossing of the centroid (C) of the balls (4) in both end areas and the centroid (C) of the balls (4) in the screw groove (31) is set to be greater than zero and no more than 30 degrees.

2. A ball screw device according to claim 1, wherein the ball circulation groove (33,34) is curved so that an intermediate area of the ball rolling direction balls sinks inward radially.

3. A ball screw device according to claim 2, wherein the ball circulation groove (33,34) is configured so that an angle (a) at which the travel direction of the nut member (2) and the centroid (C) of the balls (4) in the ball circulation groove cross is set to be no less than 40 degrees and no more than 60 degrees.

4. A ball screw device according to claim 1. wherein the connection part between the ball circulation groove (33) and the screw groove (31) is formed in a curve shape such that the centroid (C) of the balls (4) has a curvature radius of a factor of at least 1.8 of the diameter (r) of the balls (4).

5. A ball screw device according to claim 1. wherein the ball circulation grooves (33.34) are disposed so that the axial projections do not overlap each other.

6. A ball screw device according to claim 5, wherein the number of ball circulation grooves (33,34) is two and the end point of one ball circulation groove (33) and the start point of the other ball circulation groove (34) are separated by a prescribed distance in the circumferential direction.

7. A ball screw device according to claim 6, wherein the racetrack distances from the start point to the end point of both ball circulation grooves (33,34) are equal.

## Patentansprüche

1. Kugelspindelvorrichtung (1), umfassend:
eine Spindel (3) mit einer spiralförmigen Schraubennut (31,32) auf der äußeren Umfangsoberfläche, welche Spindel sich in Axialrichtung erstreckt;
ein Mutterelement (2), das auf seiner inneren Umfangsoberfläche eine Anzahl von Schraubennuten (21) mit weniger als einer Windung entsprechend der vorstehend genannten Schraubennut (31,32) aufweist, sowie eine Anzahl von Kugelumlaufnuten (33,34), die die stromaufwärts gelegene Seite und die stromabwärts gelegene Seite jeder Schraubennut (31,32) verbinden, welches Mutterelement sich in der Axialrichtung erstreckt; und
eine Anzahl von Kugeln (4), die zwischen den Schraubennuten (31,32) einliegen;
wobei die Kugelumlaufnuten (33,34) derart angeordnet sind, dass sie relativ zueinander in der Umfangsrichtung verschoben werden,
**dadurch gekennzeichnet, dass** die Kugelumlaufnut (33) ferner gekrümmt ist, so dass beide Endbereiche sich in der Kugelrollrichtung radial nach außen vorwölben, und dass der Winkel (β), der durch Schneiden des Schwerpunkts (C) der Kugeln (4) in beiden Endbereichen und des Schwerpunkts (C) der Kugeln (4) in der Schraubennut (31) gebildet wird, größer ist als Null und nicht mehr als 30° beträgt.

2. Kugelspindelvorrichtung gemäß Anspruch 1, in welcher die Kugelumlaufnut (33,34) derart gekrümmt ist, dass ein mittlerer Bereich der Kugelrollrichtung radial nach innen absinkt.

3. Kugelspindelvorrichtung gemäß Anspruch 2, bei welcher die Kugelumlaufnut (33,34) derart ausgebildet ist, dass ein Winkel (a), in welchem sich die Laufrichtung des Motorelements (2) und der Schwerpunkt (C) der Kugeln (4) in der Kugelumlaufnut schneiden, nicht kleiner ist als 40° und nicht größer ist als 60°.

4. Kugelspindelvorrichtung gemäß Anspruch 1, bei welcher der Verbindungsteil zwischen der Kugelumlaufnut (33) und der Schraubennut (31) derart gekrümmt ist, dass der Schwerpunkt (C) der Kugeln (4) einen Krümmungsradius mit einem Faktor von zumindest dem 1,8fachen des Durchmessers (r) der Kugeln (4) aufweist.

5. Kugelspindelvorrichtung gemäß Anspruch 1, bei welcher die Kugelumlaufnuten (33,34) derart angeordnet sind, dass die axialen Projektionen einander nicht überlappen.

6. Kugelspindelvorrichtung gemäß Anspruch 5, bei welcher die Anzahl von Kugelspindelnuten (33,34) gleich Zwei ist und der Endpunkt einer Kugelumlaufnut (33) und der Startpunkt der anderen Kugelumlaufnut (34) um einen vorbestimmten Abstand in der Umfangsrichtung voneinander getrennt sind.

7. Kugelspindelvorrichtung gemäß Anspruch 6, bei welcher die Laufwegabstände vom Startpunkt zum Endpunkt der Kugelumlaufnuten (33,34) gleich sind.

## Revendications

1. Dispositif de vis à billes, comprenant :
un axe de vis (3) comportant une gorge de vis en spirale (31, 32) sur la surface périphérique extérieure et s'étendant dans la direction axiale ;
un élément d'écrou (2) comportant sur une surface périphérique intérieure une pluralité de gorges de vis (21) de moins d'un tour correspondant à la gorge de vis (31, 32) ci-dessus et une pluralité de gorges de circulation de billes (33, 34) raccordant le côté amont et le côté aval de chaque gorge de vis (31, 32) et s'étendant dans la direction axiale ; et
un certain nombre de billes (4) interposées entre les gorges de vis (31, 32) ;
dans lequel les gorges de circulation de billes (33, 34) sont disposées de façon à être décalées l'une par rapport à l'autre dans la direction circonférentielle,
**caractérisé en ce que**
la gorge de circulation de billes (33) est en outre courbée de sorte que les deux zones d'extrémité dans la direction de roulement de billes gonflent radialement vers l'extérieur, et que l'angle (β) formé par le croisement du barycentre (C) des billes (4) dans les deux zones d'extrémité et le barycentre (C) des billes (4) dans la gorge de vis (31) est réglé pour être supérieur à zéro et pas supérieur à 30 degrés.

2. Dispositif de vis à billes selon la revendication 1, dans lequel la gorge de circulation de billes (33, 34) est courbée de sorte qu'une zone intermédiaire de la direction de roulement de billes descend radialement vers l'intérieur.

3. Dispositif de vis à billes selon la revendication 2, dans lequel la gorge de circulation de billes (33, 34) est configurée de telle sorte qu'angle (α) sous lequel se croisent la direction de déplacement de l'élément d'écrou (2) et le barycentre (C) des billes (4) dans la gorge de circulation de billes est réglé pour ne pas être inférieur à 40 degrés et pas supérieur à 60 degrés.

4. Dispositif de vis à billes selon la revendication 1, dans lequel la pièce de raccordement entre la gorge de circulation de billes (33) et la rainure de vis (31) est formée en une forme courbe de sorte que le barycentre (C) des billes (4) présente un rayon de courbure d'un facteur d'au moins 1,8 du diamètre (r) des billes (4).

5. Dispositif de vis à billes selon la revendication 1, dans lequel les gorges de circulation de billes (33, 34) sont disposées de telle sorte que les saillies axiales ne se recouvrent pas entre elles.

6. Dispositif de vis à billes selon la revendication 5, dans lequel le nombre de gorges de circulation de billes (33, 34) est deux et le point d'extrémité d'une gorge (33) de circulation de billes et le point de départ de l'autre gorge (34) de circulation de billes sont séparés d'une distance prescrite dans la direction circonférentielle.

7. Dispositif de vis à billes selon la revendication 6, dans lequel les distances de chemin de roulement du point de départ au point d'extrémité des deux gorges de circulation de billes (33, 34) sont identiques.
